# FASCICULE DE BREVET EUROPEEN

(11) **EP 3 529 550 B1**
(45) Date de publication et mention de la délivrance du brevet: **14.09.2022**
(21) Numéro de dépôt: 17787510.1
(22) Date de dépôt: 06.10.2017
(51) Int. Cl.: F28F 21/06, F02M 35/104, F02B 29/04, F28D 1/03, F28D 9/00

(54) **REPARTITEUR D'AIR EN MATIERE PLASTIQUE ET PROCEDE DE FABRICATION DE CE REPARTITEUR D'AIR**
LUFTVERTEILER AUS KUNSTSTOFF UND VERFAHREN ZUR HERSTELLUNG DIESES LUFTVERTEILERS
AIR DISTRIBUTOR MADE OF PLASTIC MATERIAL AND METHOD FOR MANUFACTURING SAID AIR DISTRIBUTOR

(30) Priorité: 18.10.2016 FR 1660105
(43) Date de publication de la demande: 28.08.2019
(73) Titulaire: NOVARES France, 92140 Clamart (FR)
(72) Inventeur: COUTANT, Thomas, 62223 Saint Laurent Blangy (FR); ROSSIGNOL, Vincent, 69003 Lyon (FR)
(74) Mandataire: Germain Maureau
(86) Numéro de dépôt international: PCT/FR2017/052745
(87) Numéro de publication internationale: WO 2018/073509

(56) Documents cités:
- WO-A1-03/078913
- WO-A2-2007/104580
- WO-A2-2011/064090
- WO-A2-2012/080039
- DE-A1-102012 013 755
- DE-U1-202010 007 615
- FR-A1- 2 879 262

## Description

La présente invention concerne un répartiteur d'air en matière plastique et un procédé de fabrication de ce répartiteur d'air.

Classiquement, un répartiteur d'air, aussi appelé collecteur d'admission, comprend une entrée d'air et plusieurs sorties d'air destinées à être connectées à une culasse d'un moteur pour amener à chaque cylindre du moteur l'air nécessaire à la combustion du carburant.

Il est connu de positionner un échangeur thermique à l'intérieur du répartiteur pour opérer un échange thermique entre l'air circulant à travers le répartiteur en direction du moteur et un ou des fluides circulant à travers l'échangeur thermique. L'échangeur thermique est traditionnellement formé par une pile de plaques en aluminium. Les plaques, généralement de forme rectangulaire, forment un bloc parallélépipédique. Du fait des pressions exercées au sein de l'échangeur thermique, des vis et boulonnages sont ajoutés lors de la fabrication pour assurer une tenue mécanique suffisante. Il est ainsi connu du document WO2012/080039 un échangeur de chaleur à plaques empilées.

Un premier inconvénient de ces répartiteurs avec échangeur intégré est un encombrement important du fait de la forme parallélépipédique de l'échangeur thermique. Cette forme ne permet pas à l'échangeur thermique d'occuper de manière optimale le volume disponible.

Un deuxième inconvénient est un effet de by-pass existant entre l'échangeur thermique et le répartiteur. Une partie du flux d'air entrant dans le répartiteur contourne l'échangeur thermique en passant entre les jeux existants entre l'échangeur thermique et le répartiteur. Ce flux de by-pass amoindrit le rendement et empêche l'obtention d'une température d'air homogène en sortie du répartiteur.

Un autre inconvénient est la durée du procédé de fabrication qui nécessite, afin d'assurer la tenue mécanique, la fixation de vis, boulons ou pontets, qui sont autant de pièces indépendantes rapportées.

Aussi, la présente invention vise à pallier tout ou partie de ces inconvénients en proposant un répartiteur d'air offrant une tenue mécanique, une compacité, et un rendement améliorés, ainsi qu'un procédé de fabrication de ce répartiteur, permettant de réduire la durée de fabrication tout en conservant une tenue mécanique de qualité.

A cet effet, la présente invention a pour objet un répartiteur d'air comprenant deux demi-coquilles en matière plastique et une pile de plaques en matière plastique, les demi-coquilles délimitant un volume à l'intérieur duquel est positionnée la pile de plaques, la pile de plaques comprenant deux plaques d'extrémité et la pile de plaques délimitant entre ses plaques adjacentes un ensemble d'espaces intermédiaires adaptés à une circulation de fluide, dans lequel les plaques de la pile de plaques sont fixées les unes aux autres, chaque plaque d'extrémité est fixée à l'une des deux demi-coquilles, et les deux demi-coquilles sont fixées l'une à l'autre.

Ainsi, le répartiteur selon l'invention offre une tenue mécanique, une compacité, ainsi qu'un rendement améliorés.

La fixation des deux demi-coquilles directement entre elles, combinée à la fixation des plaques directement entre elles et des plaques d'extrémité aux demi-coquilles, offre une résistance à la pression accrue.

De plus, le fait que les plaques d'extrémité soit solidaires des demi-coquilles permet d'empêcher le passage d'air entre les plaques d'extrémité et les demi-coquilles, en vue d'éviter un effet by-pass.

Les demi-coquilles et les plaques sont en matière plastique, offrant la possibilité d'être conformées selon une forme prédéterminée correspondant de manière optimale à un volume disponible à proximité du moteur.

Selon un mode de réalisation préféré, les plaques de la pile de plaques sont fixées les unes aux autres par collage et chaque plaque d'extrémité est fixée à l'une des deux demi-coquilles par collage, tandis que les deux demi-coquilles sont fixées l'une à l'autre par soudage.

Ces caractéristiques offrent une résistance à la pression améliorée, un effet by-pass limité, ainsi qu'un gain de temps lors de la fabrication.

Selon un mode de réalisation préféré, le répartiteur comprend au moins une colonne de guidage et renfort, cette colonne traversant les plaques de la pile de plaques en reliant les deux demi-coquilles.

Ainsi, la tenue mécanique est améliorée.

Selon un mode de réalisation préféré, au moins une des deux demi-coquilles et la plaque d'extrémité fixée contre celle-ci délimitent entre elles un espace intermédiaire adapté à une circulation de fluide, cet espace intermédiaire étant en communication fluidique avec au moins un des espaces intermédiaires de l'ensemble d'espaces intermédiaires.

Cette configuration permet d'améliorer le rendement en consacrant le maximum de l'espace disponible dans le répartiteur à la fonction d'échange thermique.

Selon un mode de réalisation préféré, au moins une des deux demi-coquilles et la plaque d'extrémité fixée contre celle-ci comprennent des moyens d'emboîtement configurés pour permettre l'emboîtement de cette demi-coquille et de cette plaque d'extrémité.

Les moyens d'emboîtement aident au positionnement adéquat de la plaque d'extrémité par rapport à la demi-coquille, permettant de réduire la durée d'assemblage. Les moyens d'emboîtement limitent également l'effet by-pass.

Selon un mode de réalisation préféré, les moyens d'emboîtement comprennent une rainure et une nervure destinée à être positionnée à l'intérieur de la rainure, cette rainure et cette nervure étant conformées pour s'étendre selon la forme du contour de la plaque d'extrémité fixée à cette demi-coquille.

Cela permet de réduire efficacement l'effet de by-pass.

La rainure peut elle-même être délimitée par deux nervures parallèles. La rainure est avantageusement plus large que la nervure, si bien qu'il existe un jeu de part et d'autre de la nervure quand celle-ci est insérée dans la rainure. De préférence, la colle utilisée pour fixer les plaques d'extrémité aux demi-coquilles correspondantes est déposée à l'intérieur de la rainure. Ce jeu nécessite un positionnement très précis de la plaque d'extrémité vis-à-vis de la demi-coquille correspondante. Pour ce faire, le répartiteur d'air peut comprendre des moyens de positionnement du type godrons ou cannelures.

Selon un mode de réalisation préféré, les plaques de la pile de plaques comprennent chacune deux éléments déflecteurs s'étendant depuis un côté des plaques, les éléments déflecteurs des plaques adjacentes étant agencés pour se superposer afin de former une paroi déflectrice destinée à entraver un passage d'air entre les plaques et les demi-coquilles.

Ainsi, l'air entrant dans le répartiteur est guidé vers les espaces intermédiaires correspondants de la pile de plaques, au lieu de se glisser entre la pile de plaques et les demi-coquilles. Cela permet de limiter l'effet de by-pass.

Selon un autre aspect, l'invention a pour objet un véhicule, notamment un véhicule automobile, comprenant un répartiteur d'air ayant les caractéristiques précitées.

Ce véhicule bénéfice d'un répartiteur avec échangeur thermique intégré offrant une compacité et un rendement améliorés du fait de l'occupation optimale de la place disponible à proximité du moteur.

Selon un autre aspect, l'invention a aussi pour objet un procédé de fabrication d'un répartiteur d'air, dans lequel le procédé de fabrication comprend le fait de :
- fixer les unes aux autres les plaques adjacentes de la pile de plaques,
- fixer les plaques d'extrémité respectivement à l'une et l'autre des deux demi-coquilles,
- fixer les demi-coquilles l'une à l'autre.

Le procédé selon l'invention permet de gagner du temps en fabrication tout en assurant une résistance à la pression élevée.

Selon un mode de réalisation préféré, les plaques de la pile de plaques sont fixées les unes aux autres par collage et chaque plaque d'extrémité est fixée à l'une des deux demi-coquilles par collage, tandis que les deux demi-coquilles sont fixées l'une à l'autre par soudage.

Ainsi, le procédé permet de s'affranchir des étapes de vissage et boulonnage, et ainsi réduire la durée de fabrication.

Selon un mode de réalisation préféré, le soudage des demi-coquilles intervient après collage des plaques entre elles et de chaque plaque d'extrémité à la demi-coquille correspondante.

Il en résulte un gain de temps substantiel en fabrication dans la mesure où la polymérisation de la colle a lieu pendant et après le soudage des demi-coquilles, en temps masqué.

De plus, la polymérisation de la colle n'étant pas achevée au moment du soudage, et le soudage impliquant une variation dimensionnelle qui tend à rapprocher les demi-coquilles l'une de l'autre, on obtient un effet d'enserrement des plaques au cours du soudage, ce qui améliore la résistance à la pression.

Selon un mode de réalisation préféré, toutes les plaques de la pile de plaques sont au préalable collées les unes aux autres de manière à former un bloc, ce bloc étant ensuite fixé aux demi-coquilles par collage de chaque plaque d'extrémité à la demi-coquille correspondante.

Cette caractéristique permet de réduire la durée de fabrication.

Selon un mode de réalisation préféré, l'une des demi-coquilles comprend au moins une colonne de guidage et renfort, et dans lequel le procédé comprend une étape de positionnement des plaques relativement à l'une des demi-coquilles par translation des plaques le long de la colonne de guidage et renfort insérée à travers une ouverture des plaques de la pile de plaques.

Un avantage de ces caractéristiques est un positionnement plus précis et plus rapide des plaques relativement à la demi-coquille correspondante.

Selon un mode de réalisation préféré, la colonne de guidage et renfort est venue de matière avec l'une des demi-coquilles.

Compte-tenu de la solidité de la liaison ainsi obtenue entre la colonne de guidage et renfort et la demi-coquille correspondante, la colonne peut être plus étroite, si bien que la surface d'échange thermique entre les plaques est plus importante. Le rendement est en conséquence amélioré sans préjudice de la résistance à la pression.

D'autres caractéristiques et avantages de la présente invention ressortiront clairement de la description détaillée ci-après d'un mode de réalisation, donné à titre d'exemple non limitatif, en référence aux dessins annexés dans lesquels :
- Les figures 1 et 2 sont des vues éclatées et en perspective d'un répartiteur selon un mode de réalisation de l'invention,
- La figure 3 est une vue de côté d'un répartiteur selon un mode de réalisation de l'invention,
- La figure 4 est une vue de dessus d'une demi-coquille d'un répartiteur selon un mode de réalisation de l'invention,
- La figure 5 est une vue de dessus d'une demi-coquille et d'une plaque d'un répartiteur selon un mode de réalisation de l'invention,
- La figure 6 est une vue de dessus d'une demi-coquille et d'une plaque d'un répartiteur selon un mode de réalisation de l'invention,
- La figure 7 est une vue en perspective d'une pile de plaques d'un répartiteur selon un mode de réalisation de l'invention.

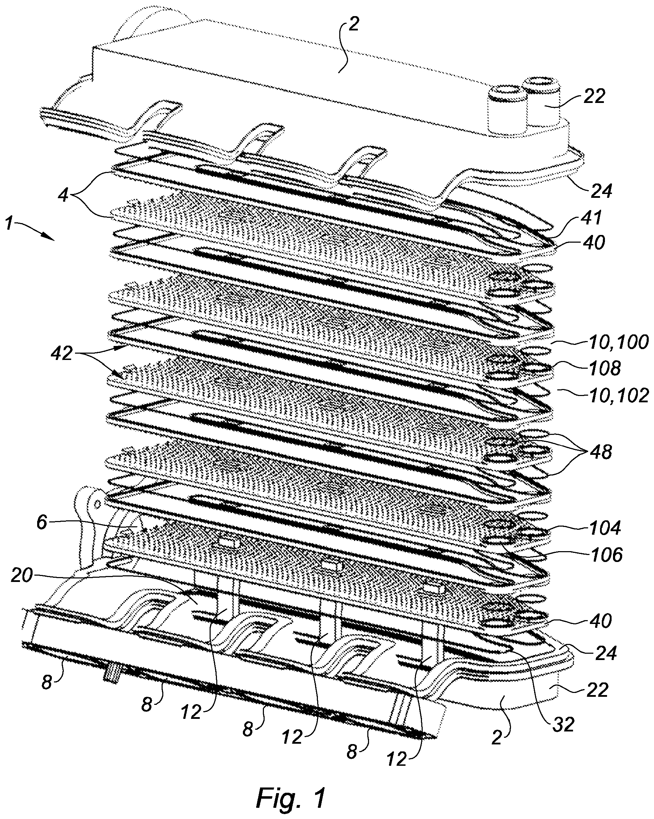

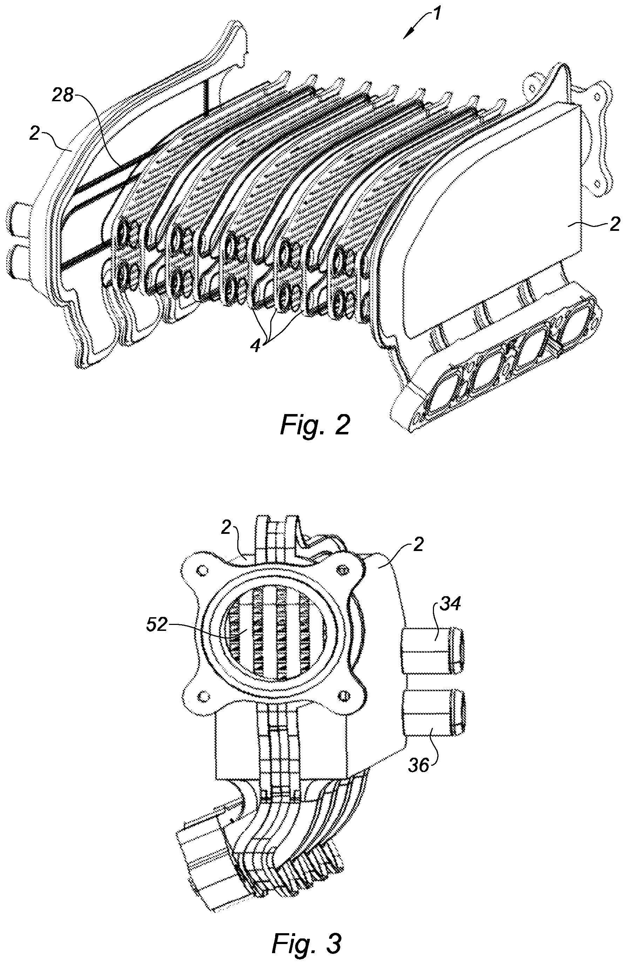

Les figures 1 et 2 montrent un répartiteur 1 d'air selon un mode de réalisation de l'invention. Le répartiteur 1 d'air comprend deux demi-coquilles 2 et une pile de plaques 4. La pile de plaques 4 forme un échangeur thermique. Les deux demi-coquilles 2 délimitent entre elles un volume destiné à recevoir la pile de plaques 4.

Le répartiteur 1 d'air comprend aussi une entrée 6 d'air et plusieurs sorties 8 d'air destinées à être connectées à une culasse d'un moteur (non représenté) pour amener à chaque cylindre du moteur l'air nécessaire à la combustion du carburant. L'entrée 6 d'air et les sorties 8 d'air débouchent dans le volume délimité par les deux demi-coquilles 2. L'échangeur thermique formé par l'empilement des plaques 4 est agencé entre l'entrée 6 et les sorties 8, afin que l'air entrant dans le répartiteur 1 passe à travers la pile de plaques 4 pour y subir un transfert thermique avant de ressortir. Les conduits délimitant l'entrée 6 et les sorties 8 peuvent être venus de matière avec l'une et/ou l'autre des deux demi-coquilles 2, et peuvent être formés du fait de l'assemblage des deux demi-coquilles, comme cela est illustré sur les figures 1 à 3.

Le répartiteur d'air 1 est en matière plastique. Plus précisément, les plaques 4 de la pile de plaques 4 sont en matière plastique incluant une charge thermiquement conductrice, par exemple du polyamide 66 (PA66) comprenant une charge de graphite et/ou de carbone, pour procurer une conductivité thermique à 20°C supérieure à 0, 6 W.m⁻¹.K⁻¹, de préférence égale ou supérieure à 1 W.m⁻¹.K⁻¹.

Les demi-coquilles 2 sont également en matière plastique, de préférence distincte de la matière plastique constituant les plaques 4, destinée à résister à de fortes pressions, par exemple jusqu'à environ neuf bars, et à des températures élevées de l'ordre par exemple d'environ 200 à 220°C. Cette matière plastique peut être notamment du polyamide 6 (PA6) ou 66 (PA66).

L'utilisation de matière plastique permet de réaliser des formes de répartiteur pouvant s'insérer de manière optimale dans les espaces disponibles à proximité du moteur, et de faire en sorte que l'échangeur thermique formé par les plaques occupe un maximum de volume disponible à l'intérieur du répartiteur, de manière à disposer d'un rendement élevé.

La pile de plaques 4 comprend des plaques 4 empilées les unes à la suite des autres selon une direction d'empilement prédéterminée, par exemple rectiligne. La pile de plaques 4 comprend une pluralité de plaques 4, dont deux plaques 40 d'extrémité entre lesquelles s'étendent les autres plaques 4. Les plaques 4 peuvent être de même forme et de mêmes dimensions.

La pile de plaques 4 délimite, entre les plaques 4 adjacentes, un ensemble d'espaces 10 intermédiaires. Chaque espace 10 intermédiaire est destiné à une circulation de fluide entre les plaques 4 pour permettre notamment un échange thermique entre le fluide circulant dans cet espace 10 intermédiaire et un espace 10 intermédiaire adjacent.

L'ensemble d'espaces 10 intermédiaires comprend ici des espaces 100 intermédiaires ouverts et des espaces 102 intermédiaires fermés. De préférence, les espaces 100 intermédiaires ouverts et les espaces 102 intermédiaires fermés sont disposés de manière alternée dans la direction d'empilement.

Les espaces 102 fermés sont connectés fluidiquement entre eux pour permettre une circulation de fluide à travers tous ces espaces 102 intermédiaires fermés. Ainsi, l'échangeur thermique comprend un canal d'admission et un canal d'évacuation de fluide, qui peuvent être formés par une pluralité d'ouvertures 104 d'entrée et d'ouvertures 106 de sortie, éventuellement ceinturées par une paroi 108 périphérique, et par exemple ménagées à travers les plaques 4, chaque plaque 4 présentant une ouverture 104 d'entrée et une ouverture 106 de sortie. Le répartiteur 1 comprend par ailleurs une ouverture 34 d'admission de fluide et une ouverture 36 d'évacuation de fluide traversant l'une des deux demi-coquilles 2 et débouchant chacune dans un des espaces 102 intermédiaires fermés pour permettre l'entrée et la sortie de fluide dans les espaces 102 intermédiaires fermés.

Les espaces 100 intermédiaires ouverts ont une ouverture d'entrée communiquant avec l'entrée 6 d'air du répartiteur et une ouverture de sortie communiquant avec les sorties 8 d'air du répartiteur 1. Les espaces 100 intermédiaires ouverts sont donc ici destinés à la circulation d'air tandis que les espaces 102 intermédiaires fermés peuvent être destinés à la circulation d'un fluide caloporteur, par exemple de l'eau glycolée, destiné à échanger thermiquement avec l'air traversant le répartiteur 1 et les espaces 100 intermédiaires ouverts.

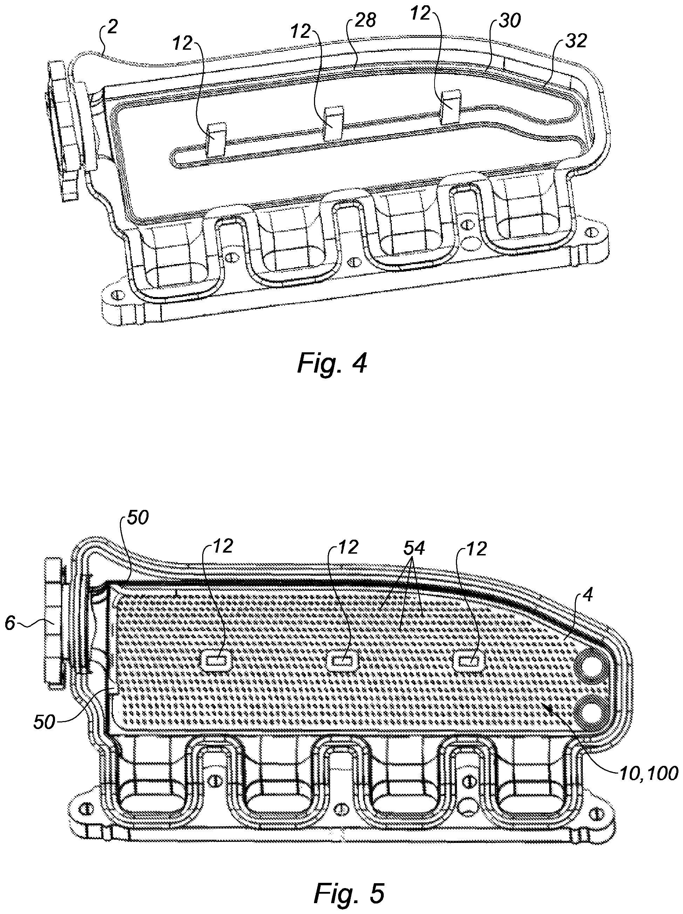

Comme visible sur les figures 2 et 4, l'une des deux ou les deux demi-coquilles 2 peuvent délimiter avec la plaque 40 d'extrémité correspondante un espace 102 intermédiaire fermé communiquant avec les autres espaces 102 intermédiaires fermés.

Afin d'assurer une résistance élevée à la pression, les plaques 4 de la pile de plaques 4 sont fixées, notamment collées, les unes aux autres tandis que les deux demi-coquilles 2 sont directement fixées, notamment soudées, l'une à l'autre. De plus, les plaques 40 d'extrémité sont respectivement fixées, notamment collées, à l'une et l'autre des deux demi-coquilles 2.

On notera ainsi que les plaques 4 sont uniquement fixées entre elles. Seules les plaques 40 d'extrémité sont fixées aux demi-coquilles 2, notamment à une paroi 20 de fond des demi-coquilles 2. Il existe donc ici un jeu entre la tranche des plaques 4 et les demi-coquilles 2, notamment une paroi 22 latérale des demi-coquilles 2.

Par « directement fixées l'une à l'autre », on entend fixées au contact l'une de l'autre, et non par l'intermédiaire d'une pièce intercalée entre les parties fixées l'une à l'autre.

De préférence, les plaques de la pile de plaques sont fixées les unes aux autres par collage.

Chaque plaque d'extrémité est préférentiellement fixée à l'une des deux demi-coquilles par collage.

Les deux demi-coquilles sont avantageusement fixées l'une à l'autre par soudage.

Aucune vis ni boulon n'est nécessaire pour renforcer la tenue mécanique du répartiteur 1.

De préférence, l'interface de soudure des demi-coquilles est dans un plan sensiblement orthogonal à la direction d'empilement des plaques 4, de sorte que l'opération de soudure ait pour effet que les demi-coquilles 2 enserrent les plaques 4.

Le cordon de soudure liant les demi-coquilles 2 est avantageusement continu et suit de préférence le bord 24 ou contour extérieur des demi-coquilles 2.

Selon l'exemple illustré sur les figures 1 et 2, chaque demi-coquille 2 présente une paroi 20 de fond et une paroi 22 latérale. Les deux demi-coquilles 2 sont ici fixées, notamment soudées, au niveau du bord 24 situé à l'extrémité de leur paroi 22 latérale. Alternativement, seule une des deux demi-coquilles 2 peut présenter une paroi 22 latérale et l'autre des deux demi-coquilles 2 peut être formée par une paroi 20 de fond seulement. Le bord 24 de la paroi 22 latérale de la première demi-coquille 2 est alors fixé directement sur la paroi 20 formant la deuxième demi-coquille 2.

La colle utilisée pour coller les plaques 4 entre elles ou pour coller les plaques 40 d'extrémité aux demi-coquilles 2 respectives est par exemple du type colle époxy ou colle à base de silicone, permettant notamment de résister aux températures relativement élevées au sein de l'échangeur thermique.

Le soudage des demi-coquilles 2 peut être réalisé par vibration, par infrarouge, ou par une combinaison des deux. De préférence, les demi-coquilles 2 sont soudées par infrarouge, ce qui apporte une meilleure propreté aux pièces assemblées, particulièrement recherchée pour un répartiteur.

Comme illustré sur les figures 1 et 4, le répartiteur 1 comprend avantageusement une ou plusieurs colonnes 12 de guidage et renfort permettant de renforcer la résistance à la pression du répartiteur 1. Les colonnes 12 de guidage et renfort joignent les deux demi-coquilles 2. Ces colonnes 12 présentent une extrémité solidaire de l'une des deux demi-coquilles 2 et une extrémité opposée solidaire de l'autre des deux demi-coquilles 2.

De préférence, comme visible sur les figures, les colonnes 12 sont venues de matière avec l'une des deux demi-coquilles 2 et fixées, notamment soudées, au niveau de leur extrémité sur l'autre demi-coquille 2, ce qui permet de réduire la durée de fabrication tout en améliorant la tenue mécanique.

On notera que les colonnes 12 sont avantageusement rectilignes et peuvent s'étendre selon la direction d'empilement. Les colonnes 12 traversent les plaques 4 de la pile de plaques 4 afin de joindre les parois 20 de fond des deux demi-coquilles 2. Les plaques 4 sont ainsi pourvues d'ouvertures 46 traversantes, ici alignées, à travers lesquelles s'étendent les colonnes 12.

L'une des deux ou les deux demi-coquilles et la ou les plaques d'extrémité correspondantes peuvent comprendre des moyens d'emboîtement, formés par exemple par une rainure 30 et une nervure 41 complémentaires. La rainure 30 peut être ménagée à l'intérieur d'une nervure 28 en saillie depuis la paroi 20 de fond, comme visible sur les figures 1, 2 et 4, tandis que la plaque 40 d'extrémité correspondante comprend la nervure 41 complémentaire de cette rainure. La nervure 28 dessine le contour de la plaque 40 d'extrémité correspondante, c'est-à-dire a sensiblement la forme du contour de cette plaque 40 d'extrémité, et est destinée à être en appui contre le bord de la face 42 de la plaque 40 d'extrémité en regard de la demi-coquille 2. La nervure 28 matérialise la zone où appliquer par exemple la colle. Ainsi, la plaque 40 d'extrémité est fixée à la demi-coquille 2 correspondante au niveau de l'emboîtement entre la rainure 30 et la nervure 41. Un joint 32 d'étanchéité, visible notamment sur les figures 1 et 4, peut être positionné dans la rainure 30.

On notera que des joints 48 d'étanchéité peuvent être prévus entre les plaques 4 adjacentes pour assurer l'étanchéité de la pile de plaques 4, en particulier des espaces 102 intermédiaires fermés. Les joints 48 d'étanchéité peuvent être agencés au sein des zones de collage reliant les plaques 4 entre elles et le cas échéant les plaques 40 d'extrémité aux demi-coquilles 2 respectives.

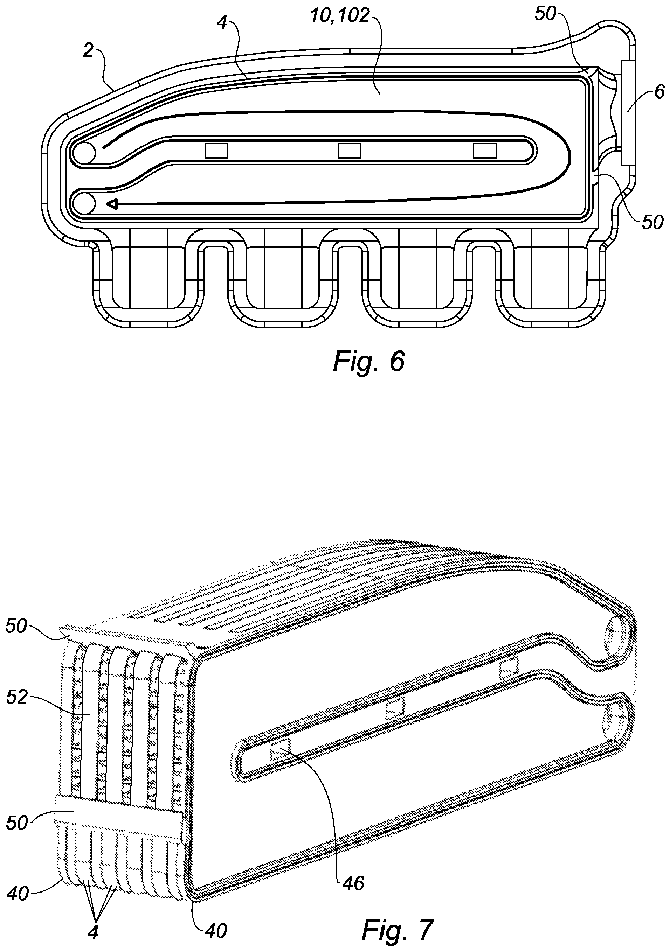

Comme illustré sur les figures 5 et 6, les plaques 4 de la pile de plaques 4 comprennent chacune deux éléments 50 déflecteurs s'étendant depuis un côté des plaques 4, jusqu'à la paroi 42 latérale de l'une ou l'autre des deux demi-coquilles 2. Ces éléments 50 déflecteurs s'étendent de part et d'autre de l'entrée 6 d'air du répartiteur, et délimitent en partie l'ouverture d'entrée des espaces 100 intermédiaires ouverts. Ainsi, les éléments 50 déflecteurs empêchent l'air entrant dans le répartiteur 1 de passer entre l'échangeur thermique et la paroi 42 latérale du répartiteur 1, ce qui limite l'effet de by-pass. Les éléments 50 déflecteurs des plaques 4 sont agencés pour se superposer, comme visible sur la figure 7, de sorte que l'ensemble des éléments 50 déflecteurs forment une paroi déflectrice destinée à entraver un passage d'air entre l'échangeur thermique et le répartiteur 1. L'extrémité des éléments 50 déflecteurs est en appui contre l'une ou l'autre des demi-coquilles 2, de préférence solidaire de celle-ci, par exemple collée à la demi-coquille 2 correspondante.

Comme illustré sur la figure 7, les plaques 4 peuvent présenter un bord 52 d'attaque conformée pour favoriser un écoulement laminaire à l'entrée des espaces 100 intermédiaires ouverts.

Par ailleurs, comme visible sur la figure 5, les plaques 4 peuvent présenter des obstacles ou picots 54 en saillie sur une face 42, délimitant par exemple en partie un espace 100 intermédiaire ouvert. Cela favorise un écoulement turbulent au sein des espaces 10 intermédiaires afin d'améliorer le rendement de l'échange thermique.

L'invention concerne aussi un véhicule, notamment un véhicule automobile, comprenant le répartiteur 1 d'air ayant tout ou partie des caractéristiques décrites précédemment.

L'invention a aussi pour objet un procédé de fabrication d'un répartiteur 1 d'air ayant tout ou partie des caractéristiques décrites précédemment, comprenant donc notamment deux demi-coquilles 2 en matière plastique et une pile de plaques 4 en matière plastique, les demi-coquilles 2 délimitant un volume à l'intérieur duquel est positionnée la pile de plaques 4, cette pile de plaques 4 comprenant deux plaques 40 d'extrémité et délimitant entre ses plaques 4 adjacentes un ensemble d'espaces 10 intermédiaires adaptés à une circulation de fluide. Les plaques 4 et/ou les demi-coquilles 2 peuvent être réalisées par moulage par injection.

Le procédé de fabrication comprend le fait de fixer, de préférence coller, les unes aux autres les plaques 4 adjacentes de la pile de plaques 4, de fixer, de préférence coller, les plaques 40 d'extrémité respectivement à l'une et l'autre des deux demi-coquilles 2, et de fixer, de préférence souder, les demi-coquilles 2 directement entre elles.

On notera ainsi que les plaques 4 sont uniquement fixées entre elles. Seules les plaques 40 d'extrémité sont fixées aux demi-coquilles 2. Aucune vis ni boulon n'est nécessaire pour renforcer la tenue mécanique du répartiteur 1.

De préférence, l'interface de soudure des demi-coquilles est dans un plan sensiblement orthogonal à la direction d'empilement des plaques 4, de sorte que l'opération de soudure ait pour effet que les demi-coquilles 2 enserrent les plaques 4.

Le cordon de soudure liant les demi-coquilles 2 est avantageusement continu et suit de préférence le bord 24 ou contour extérieur des demi-coquilles 2.

La colle utilisée pour coller les plaques 4 entre elles ou pour coller les plaques 40 d'extrémité aux demi-coquilles 2 respectives est par exemple du type colle époxy ou colle à base de silicone, permettant notamment de résister aux températures relativement élevées au sein de l'échangeur thermique

Le soudage des demi-coquilles 2 peut être réalisé par vibration, par infrarouge, ou par une combinaison des deux. De préférence, les demi-coquilles 2 sont soudées par infrarouge, ce qui apporte une meilleure propreté aux pièces assemblées, particulièrement recherchée pour un répartiteur.

De préférence, le soudage des demi-coquilles 2 intervient après collage des plaques 4 entre elles et de chaque plaque 40 d'extrémité à la demi-coquille 2 correspondante, mais avant la polymérisation complète de la ou des colles utilisées pour ces collages. Cela permet un gain de temps important en termes de durée de fabrication, car la réticulation de la colle intervient en temps masqué. De surcroît, le soudage a pour effet, compte-tenu de la variation dimensionnelle qu'il génère, de rapprocher les demi-coquilles 2; celles-ci enserrent donc la pile de plaques 4 avant polymérisation de la colle liant les plaques 4 entre elles et les plaques 40 d'extrémité aux demi-coquilles 2 respectives.

Eventuellement, le procédé peut comprendre une étape de compression des demi-coquilles l'une contre l'autre pendant le soudage et/ou pendant la durée de polymérisation de la colle liant les plaques 4 entre elles et les plaques 40 d'extrémité aux demi-coquilles 2.

Le procédé peut également comprendre une étape de positionnement des plaques 4 relativement à l'une des demi-coquilles 2 par insertion des plaques 4 de la pile de plaques 4 sur la ou des colonnes 12 de guidage et renfort à travers la ou les ouvertures 46 correspondantes des plaques 4 de la pile de plaques 4.

Cette étape de positionnement peut avantageusement comprendre une étape de pré-collage des plaques 4, dont les plaques 40 d'extrémité, de manière à former au préalable un bloc constituant la pile de plaques 4, comme visible sur la figure 7. Ce bloc est ensuite positionné relativement à l'une des deux demi-coquilles 2, le cas échéant par translation le long des colonnes 12 insérées dans les ouvertures 46, et collé à cette demi-coquille 2 par l'intermédiaire de la plaque 40 d'extrémité correspondante. L'autre demi-coquille 2 est ensuite collée à l'autre plaque 40 d'extrémité, puis les demi-coquilles sont soudées l'une à l'autre.

Alternativement, l'étape de positionnement peut être réalisée plaque 4 par plaque 4, en commençant par la plaque 40 d'extrémité qui une fois mise en place est collée à la demi-coquille 2 correspondante. Les autres plaques 4 étant collées les unes aux autres au fur et à mesure de leur positionnement, en terminant par l'autre plaque 40 d'extrémité et son collage à l'autre demi-coquille 2. Les demi-coquilles 2 sont ensuite soudées l'une à l'autre.

On notera que les colonnes 12 sont avantageusement venues de moulage avec l'une ou l'autre des deux demi-coquilles 2, ce qui permet un gain de temps et une robustesse finale améliorés.

Le procédé peut comprendre le cas échéant le collage de l'extrémité des éléments 50 déflecteurs aux demi-coquilles 2 afin de supprimer l'effet by-pass.

## Revendications

1. Répartiteur (1) d'air comprenant deux demi-coquilles (2) et une pile de plaques (4), les demi-coquilles (2) délimitant un volume à l'intérieur duquel est positionnée la pile de plaques (4), la pile de plaques (4) comprenant deux plaques (40) d'extrémité et la pile de plaques (4) délimitant entre ses plaques (4) adjacentes un ensemble d'espaces (10) intermédiaires adaptés à une circulation de fluide, dans lequel les plaques (4) de la pile de plaques (4) sont fixées les unes aux autres, chaque plaque (40) d'extrémité est fixée à l'une des deux demi-coquilles (2), et les deux demi-coquilles (2) sont fixées l'une à l'autre, **caractérise en ce que** les deux demi-coquilles sont en matière plastique et la pile de plaques est en matière plastique.

2. Répartiteur (1) selon la revendication 1, dans lequel les plaques (4) de la pile de plaques (4) sont fixées les unes aux autres par collage et chaque plaque (40) d'extrémité est fixée à l'une des deux demi-coquilles (2) par collage, tandis que les deux demi-coquilles (2) sont fixées l'une à l'autre par soudage.

3. Répartiteur (1) selon la revendication 1 ou 2, dans lequel le répartiteur (1) comprend au moins une colonne (12) de guidage et renfort, cette colonne (12) traversant les plaques (4) de la pile de plaques (4) en reliant les deux demi-coquilles (2).

4. Répartiteur (1) selon l'une des revendications 1 à 3, dans lequel au moins une des deux demi-coquilles (2) et la plaque (40) d'extrémité fixée contre celle-ci délimitent entre elles un espace (102) intermédiaire adapté à une circulation de fluide, cet espace (102) intermédiaire étant en communication fluidique avec au moins un des espaces (10) intermédiaires de l'ensemble d'espaces (10) intermédiaires.

5. Répartiteur (1) selon l'une des revendications 1 à 4, dans lequel au moins une des deux demi-coquilles (2) et la plaque (40) d'extrémité fixée contre celle-ci comprennent des moyens d'emboîtement configurés pour permettre l'emboîtement de cette demi-coquille (2) et de cette plaque (40) d'extrémité.

6. Répartiteur (1) selon la revendication 5, dans lequel les moyens d'emboîtement comprennent une rainure (30) et une nervure (41) destinée à être positionnée à l'intérieur de la rainure (30), cette rainure (30) et cette nervure (41) étant conformées pour s'étendre selon la forme du contour de la plaque (40) d'extrémité fixée à cette demi-coquille (2).

7. Répartiteur (1) selon l'une des revendications 1 à 6, dans lequel les plaques (4) de la pile de plaques (4) comprennent chacune deux éléments (50) déflecteurs s'étendant depuis un côté des plaques (4), les éléments (50) déflecteurs des plaques (4) adjacentes étant agencés pour se superposer afin de former une paroi déflectrice destinée à entraver un passage d'air entre les plaques (4) et les demi-coquilles (2).

8. Véhicule, notamment un véhicule automobile, comprenant un répartiteur (1) d'air selon l'une des revendications 1 à 7.

9. Procédé de fabrication d'un répartiteur d'air selon l'une des revendications 1 à 7, dans lequel le procédé de fabrication comprend le fait de :
- fixer les unes aux autres les plaques (4) adjacentes de la pile de plaques (4),
- fixer les plaques (40) d'extrémité respectivement à l'une et l'autre des deux demi-coquilles (2),
- fixer les demi-coquilles (2) l'une à l'autre.

10. Procédé selon la revendication 9, dans lequel les plaques (4) de la pile de plaques (4) sont fixées les unes aux autres par collage et chaque plaque (40) d'extrémité est fixée à l'une des deux demi-coquilles (2) par collage, tandis que les deux demi-coquilles (2) sont fixées l'une à l'autre par soudage.

11. Procédé selon la revendication 10, dans lequel le soudage des demi-coquilles (2) intervient après collage des plaques (4) entre elles et de chaque plaque (40) d'extrémité à la demi-coquille (2) correspondante.

12. Procédé selon l'une des revendications 9 à 11, dans lequel toutes les plaques (4) de la pile de plaques (4) sont au préalable collées les unes aux autres de manière à former un bloc, ce bloc étant ensuite fixé aux demi-coquilles (2) par collage de chaque plaque (40) d'extrémité à la demi-coquille (2) correspondante.

13. Procédé selon l'une des revendications 9 à 12, dans lequel l'une des demi-coquilles (2) comprend au moins une colonne (12) de guidage et renfort, et dans lequel le procédé comprend une étape de positionnement des plaques (4) relativement à l'une des demi-coquilles (2) par translation des plaques (4) le long de la colonne (12) de guidage et renfort insérée à travers une ouverture (46) des plaques (4) de la pile de plaques (4).

14. Procédé selon la revendication 13, dans lequel la colonne (12) de guidage et renfort est venue de matière avec l'une des demi-coquilles (2).

## Patentansprüche

1. Luftverteiler (1), umfassend zwei Halbschalen (2) und einen Plattenstapel (4), wobei die Halbschalen (2) ein Volumen begrenzen, in dessen Inneren der Plattenstapel (4) positioniert ist, der Plattenstapel (4) zwei Endplatten (40) umfasst und der Plattenstapel (4) zwischen seinen angrenzenden Platten (4) eine Gruppe von Zwischenräumen (10) begrenzt, die an eine Fluidzirkulation angepasst sind, in der die Platten (4) des Plattenstapels (4) aneinander befestigt sind, wobei jede Endplatte (40) an einer der zwei Halbschalen (2) befestigt ist und die zwei Halbschalen (2) aneinander befestigt sind, **dadurch gekennzeichnet, dass** die zwei Halbschalen aus Kunststoffmaterial sind und der Plattenstapel aus Kunststoffmaterial ist.

2. Luftverteiler (1) nach Anspruch 1, wobei die Platten (4) des Plattenstapels (4) durch Kleben aneinander befestigt sind und jede Endplatte (40) durch Kleben an eine der zwei Halbschalen (2) befestigt ist, während die zwei Halbschalen (2) durch Schweißen aneinander befestigt sind.

3. Luftverteiler (1) nach Anspruch 1 oder 2, wobei der Luftverteiler (1) mindestens eine Führungs- und Verstärkungssäule (12) umfasst, wobei diese Säule (12) die Platten (4) des Plattenstapels (4) durchläuft und dabei die zwei Halbschalen (2) verbindet.

4. Luftverteiler (1) nach einem der Ansprüche 1 bis 3, wobei mindestens eine der zwei Halbschalen (2) und die an dieser befestigte Endplatte (40) zwischen einander einen Zwischenraum (102) begrenzen, der an eine Fluidzirkulation angepasst ist, wobei dieser Zwischenraum (102) in Fluidverbindung mit mindestens einem der Zwischenräume (10) der Gruppe von Zwischenräumen (10) ist.

5. Luftverteiler (1) nach einem der Ansprüche 1 bis 4, wobei mindestens eine der zwei Halbschalen (2) und die an dieser befestigte Endplatte (40) Steckmittel umfassen, die konfiguriert sind, um das Zusammenstecken dieser Halbschale (2) und dieser Endplatte (40) zu ermöglichen.

6. Luftverteiler (1) nach Anspruch 5, wobei die Steckmittel eine Nut (30) und eine Rippe (41), die dazu bestimmt ist, in das Innere der Nut (30) gesteckt zu werden, umfassen, wobei die Nut (30) und die Rippe (41) so ausgebildet sind, dass sie sich entlang der Umrissform der an diese Halbschale (2) befestigten Endplatte (40) erstrecken.

7. Luftverteiler (1) nach einem der Ansprüche 1 bis 6, wobei die Platten (4) des Plattenstapels (4) jeweils zwei Umlenkelemente (50) umfassen, die sich von einer Seite der Platten (4) erstrecken, wobei die Umlenkelemente (50) angrenzender Platten (4) angeordnet sind, um sich zu überlagern, um eine Umlenkwand zu bilden, die dazu bestimmt ist, um ein Durchleiten von Luft zwischen den Platten (4) und den Halbschalen (2) zu erschweren.

8. Fahrzeug, insbesondere ein Kraftfahrzeug, umfassend einen Luftverteiler (1) nach einem der Ansprüche 1 bis 7.

9. Verfahren zur Herstellung eines Luftverteilers nach einem der Ansprüche 1 bis 7, wobei das Herstellungsverfahren umfasst:
- Befestigen der angrenzenden Platten (4) des Plattenstapels (4) aneinander,
- Befestigen der Endplatten (40) jeweils an eine der zwei Halbschalen (2),
- Befestigen der Halbschalen (2) aneinander.

10. Verfahren nach Anspruch 9, wobei die Platten (4) des Plattenstapels (4) durch Kleben aneinander befestigt sind und jede Endplatte (40) durch Kleben an eine der zwei Halbschalen (2) befestigt ist, während die zwei Halbschalen (2) durch Schweißen aneinander befestigt sind.

11. Verfahren nach Anspruch 10, wobei das Schweißen der Halbschalen (2) nach dem Kleben der Platten (4) aneinander und jeder Endplatte (40) an die entsprechende Halbschale (2) erfolgt.

12. Verfahren nach einem der Ansprüche 9 bis 11, wobei alle Platten (4) des Plattenstapels (4) vorher aneinander geklebt sind, um einen Block zu bilden, wobei dieser Block anschließend durch Kleben jeder Endplatte (40) an die entsprechende Halbschale (2) an die Halbschalen (2) befestigt wird.

13. Verfahren nach einem der Ansprüche 9 bis 12, wobei eine der Halbschalen (2) mindestens eine Führungs- und Verstärkungssäule (12) umfasst und wobei das Verfahren einen Schritt des Positionierens von Platten (4) relativ zu einer der Halbschalen (2) durch Translation von Platten (4) entlang der durch eine Öffnung (46) der Platten (4) des Plattenstapels (4) eingeführten Führungs- und Verstärkungssäule (12) umfasst.

14. Verfahren nach Anspruch 13, wobei die Führungs- und Verstärkungssäule (12) einstückig mit einer der Halbschalen (2) ist.

## Claims

1. An air distributor (1) comprising two half-shells (2) and a stack of plates (4), the half-shells (2) delimiting a volume inside which the stack of plates (4) is positioned, the stack of plates (4) comprising two end plates (40) and the stack of plates (4) delimiting between its adjacent plates (4) a set of intermediate spaces (10) adapted to a fluid circulation, in which the plates (4) of the stack of plates (4) are fastened to each other, each end plate (40) is fastened to one of the two half-shells (2), and the two half-shells (2) are fastened to each other,
**characterized in that** the two half-shells are made of plastic material and the stack of plates is made of plastic material.

2. The distributor (1) according to claim 1, wherein the plates (4) of the stack of plates (4) are fastened to each other by gluing and each end plate (40) is fastened to one of the two half-shells (2) by gluing, while the two half-shells (2) are fastened to each other by welding.

3. The distributor (1) according to claim 1 or 2, wherein the distributor (1) comprises at least one guide and reinforcing column (12), this column (12) passing through the plates (4) of the stack of plates (4) while connecting the two half-shells (2).

4. The distributor (1) according to any of claims 1 to 3, wherein at least one of the two half-shells (2) and the end plate (40) fastened against it delimit therebetween an intermediate space (102) adapted to a fluid circulation, this intermediate space (102) being in fluid communication with at least one of the intermediate spaces (10) of the set of intermediate spaces (10).

5. The distributor (1) according to any of claims 1 to 4, wherein at least one of the two half-shells (2) and the end plate (40) fastened against it comprise interlocking means configured to allow the interlocking of this half-shell (2) and this end plate (40).

6. The distributor (1) according to claim 5, wherein the interlocking means comprise a groove (30) and a rib (41) intended to be positioned inside the groove (30), this groove (30) and this rib (41) being shaped to extend according to the shape of the contour of the end plate (40) fastened to this half-shell (2).

7. The distributor (1) according to any of claims 1 to 6, wherein the plates (4) of the stack of plates (4) each comprise two deflector elements (50) extending from one side of the plates (4), the deflector elements (50) of the adjacent plates (4) being arranged to be superimposed in order to form a deflector wall intended to impede a passage of air between the plates (4) and the half-shells (2).

8. A vehicle, in particular a motor vehicle, comprising an air distributor (1) according to any of claims 1 to 7.

9. A method for manufacturing an air distributor according to any of claims 1 to 7, wherein the manufacturing method comprises:
- fastening the adjacent plates (4) of the stack of plates (4) to each other,
- fastening the end plates (40) respectively to both of the two half-shells (2),
- fastening the half-shells (2) to each other.

10. The method according to claim 9, wherein the plates (4) of the stack of plates (4) are fastened to each other by gluing and each end plate (40) is fastened to one of the two half shells (2) by gluing, while the two half-shells (2) are fastened to each other by welding.

11. The method according to claim 10, wherein the welding of the half-shells (2) occurs after gluing the plates (4) together and each end plate (40) to the corresponding half-shell (2).

12. The method according to any of claims 9 to 11, wherein all the plates (4) of the stack of plates (4) are beforehand glued to each other so as to form a block, this block being then fastened to the half-shells (2) by gluing each end plate (40) to the corresponding half-shell (2).

13. The method according to any of claims 9 to 12, wherein one of the half-shells (2) comprises at least one guide and reinforcing column (12), and wherein the method comprises a step of positioning the plates (4) relative to one of the half-shells (2) by translating the plates (4) along the guide and reinforcing column (12) inserted through an opening (46) of the plates (4) of the stack of plates (4).

14. The method according to claim 13, wherein the guide and reinforcing column (12) is formed integrally with one of the half-shells (2).
